# EUROPEAN PATENT APPLICATION

(11) **EP 1 273 505 A2**
(43) Date of publication of application: **08.01.2003**
(21) Application number: 02254741.8
(22) Date of filing: 05.07.2002
(51) Int. Cl.: B62D 63/06

(54) **Vehicle with an extension trailer**

(30) Priority: 06.07.2001 GB 0116508
(71) Applicant: HMT Supacat Limited, Honiton, Devon EX14 0RA (GB)
(72) Inventor: Dare-Bryan, Valerian John, Bury St. Edmunds, Suffolk IP29 5LA (GB)
(74) Representative: Brown, Michael Stanley

(57) **Abstract**

The rear of a vehicle (10) and the front of an extension unit (11) are provided with complementary locating formations (12, 13, 14 and 15, 16, 17) and clamping means (18) are provided for clamping the front of the extension unit (11) to the rear of the vehicle (10).

## Description

### Field of the Invention

This invention relates to vehicles and is particularly concerned with load-carrying all-terrain or off-road vehicles.

At present, trailers are used to increase the load-carrying capacities of such vehicles. However, once a trailer is connected to an all-terrain or off-road vehicle, the degree of manoeuvrability of the vehicle is adversely affected. For example, reversing at speed in confined spaces or on inclines or other uneven terrain can be difficult.

It is accordingly an object of the present invention to provide a means of increasing the load-carrying capacity of such a vehicle without significantly reducing its manoeuvrability.

### Summary of the Invention

According to the present invention there is provided the combination of a vehicle and an extension unit for the vehicle, in which the rear of the vehicle and the front of the extension unit are provided with complementary locating formations and in which clamping means are provided for clamping the front of the extension unit to the rear of the vehicle.

The complementary locating formations preferably comprise a pair of sloping surfaces at the rear of the vehicle and a pair of sloping surfaces at the front of the extension unit.

The sloping surfaces at the rear of the vehicle are preferably interconnected by a vertical surface, and the sloping surfaces at the front of the extension unit are preferably interconnected by a corresponding vertical surface.

The clamping means preferably comprises levers pivotally mounted on the extension unit and claws arranged to engage vertical elements on the rear of the vehicle with an over-centre action.

### Brief Description of the Drawings

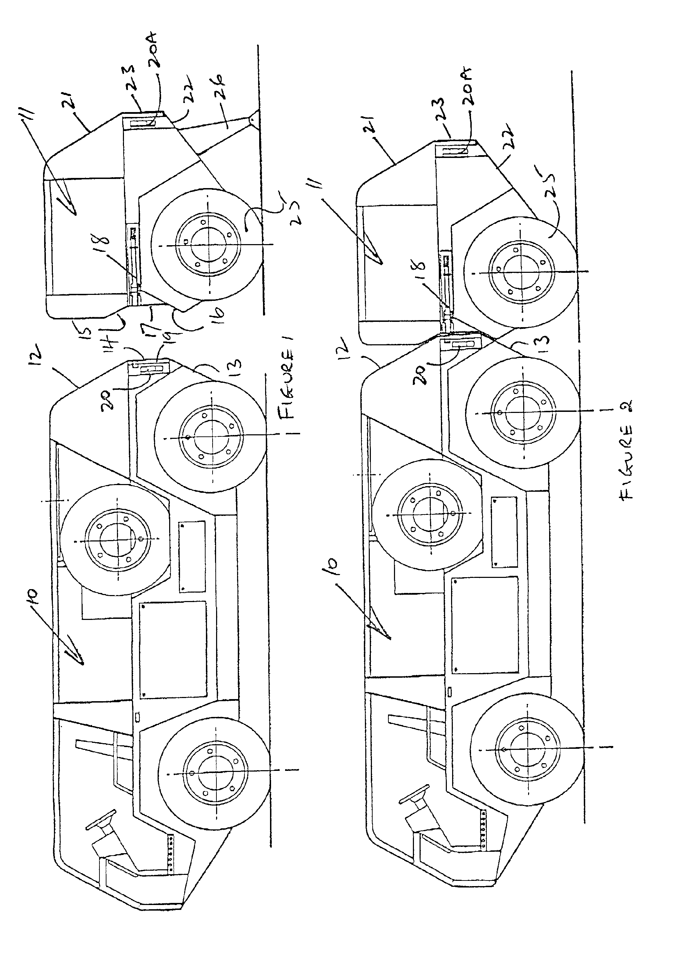

Figure is a side view of a vehicle and an extension unit prior to connection of the extension unit to the vehicle, and
Figure 2 is a corresponding side view showing the extension unit connected to the vehicle.

### Description of the Preferred Embodiment

The drawings show an off-road or all-terrain vehicle 10 and an extension unit 11. The vehicle 10 is typically a four-wheel drive vehicle and the back of the vehicle 10 includes a pair of sloping surfaces 12 and 13 interconnected by a vertical surface 14. As can be seen, the surfaces 12 and 13 are equally and oppositely inclined to the vertical. The front of the extension unit 11 includes a pair of complementary sloping surfaces 15 and 16 interconnected by a vertical surface 17. The surfaces 15 and 16 are thus also equally and oppositely inclined to the vertical. The arrangement is thus such that, when the vehicle 10 is reversed into engagement with the extension unit 11, interengagement of the sloping surfaces 12, 13, 15 and 16 will guide the two vertical surfaces 14 and 17 together.

At each side of the extension unit 11, and adjacent the front thereof, there is an over-centre clamping mechanism operated by a long lever 18 and including a claw which engages a vertical bar or tube 19 at the rear of the vehicle 10. When, therefore, the vehicle 10 is reversed into engagement with the extension unit 11 such that one corner at the rear of the vehicle 10 engages a corner at the front of the extension unit 11, an operator will take hold of the lever 18 at that side of the extension unit 11 and, utilising the leverage afforded by the long lever 18, will operate the over-centre clamping mechanism such that the claw engages the vertical bar or tube 19 with a clamping force of the order of 2 tonnes.

Once one rear corner of the vehicle 10 has been clamped to a front corner of the extension unit 12, further reversing of the vehicle 10 is effected and, once the other rear corner of the vehicle 10 is in contact with the other front corner of the extension unit 11, the clamping operation at the other side of the vehicle 10 is carried out. This clamps the extension unit 11 to the vehicle 10 in such manner that articulation of the extension unit 11 relative to the vehicle 10 will be prevented. It will be seen from the drawings that the contacting surfaces at the rear of the vehicle 10 and at the front of the extension unit 11 are of substantial area and are such at to prevent either vertical or horizontal tilting movement of the extension unit 11 relative to the vehicle 10.

The vertical bars or tubes 19 at the rear of the vehicle 10 serve to protect the rear light clusters 20 of the vehicle 10 and the arrangement is such that, once the extension unit 11 has been clamped to the vehicle 10, a multiple-pin connector is used for connection of the rear light clusters 20A on the extension unit 11 to the power supply of the vehicle 10. It is to be noted that the rear of the extension unit 11 includes equally and oppositely inclined or sloping surfaces 21 and 22 interconnected by a vertical surface 23. A vertical bar or tube 24 protects each light cluster 20A so that, if desired, the front of a further extension unit (not shown) can be connected to the rear of extension unit 11.

As shown, the extension unit has two wheels on a single axle, which may be either driven or undriven. If the axle is driven, a splined connector will be provided for connecting a p.t.o. shaft at the rear of the vehicle 10 to a drive shaft of the extension unit 11. The splined connector will be arranged for sliding movement into a position in which it connects the p.t.o. shaft to the drive shaft.

A transponder (not shown) may be provided in or on the extension unit 11 and will be arranged to communicate with a receiver (not shown) in or on the vehicle 10 so that, if the extension unit 11 has been placed in, for example, a space between two sand dunes, the driver of the vehicle 10 will readily be able to locate the extension unit 10.

The load-carrying capacity of the vehicle 10 can thus readily be increased by clamping an extension unit 11 to it. When the extension unit 11 is in its storage or "out-of-use" condition, it will be supported by means of a pivoted leg or legs 26.

## Claims

1. The combination of a vehicle (10) and an extension unit (11) for the vehicle (10), in which the rear of the vehicle (10) and the front of the extension unit (11) are provided with complementary locating formations (12, 13, 14 and 15, 16, 17) and in which clamping means (18) are provided for clamping the front of the extension unit (11) to the rear of the vehicle (10).

2. The combination claimed in Claim 1, in which the complementary locating formations comprise a pair of sloping surfaces (12, 13) at the rear of the vehicle (10) and a pair of sloping surfaces (15, 16) at the front of the extension unit (11).

3. The combination claimed in Claim 2, in which the sloping surfaces (12, 13) at the rear of the vehicle (10) are interconnected by a vertical surface (14), and the sloping surfaces (15, 16) at the front of the extension unit (11) are interconnected by a corresponding vertical surface (17).

4. The combination claimed in any one of the preceding claims, in which the clamping means comprises levers (18) pivotally mounted on the extension unit and in which the clamping means are arranged to engage vertical elements (19) on the rear of the vehicle (10) with an over-centre action.

5. The combination claimed in any one of the preceding claims, in which the extension unit (11) has two wheels (25) on a single axle and a pivoted leg (26) for supporting it when in its storage or "out-of-use" condition.

6. The combination claimed in Claim 3, in which the rear of the extension unit (11) has sloping surfaces (21, 22) which are interconnected by a vertical surface (23).
